(19) Europäisches Patentamt
European Patent Office
Office européen des brevets

(11) **EP 4 653 819 A1**

(12) **EUROPEAN PATENT APPLICATION**
published in accordance with Art. 153(4) EPC

(43) Date of publication:
**26.11.2025 Bulletin 2025/48**

(21) Application number: **23917734.8**

(22) Date of filing: **19.12.2023**

(51) International Patent Classification (IPC):
***G01D 5/20*** (2006.01)

(52) Cooperative Patent Classification (CPC):
**G01B 7/003; G01B 7/30; G01D 5/2053**

(86) International application number:
**PCT/JP2023/045500**

(87) International publication number:
**WO 2024/154523 (25.07.2024 Gazette 2024/30)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **18.01.2023 JP 2023005863**

(71) Applicant: **DENSO CORPORATION**
**Kariya-city, Aichi 448-8661 (JP)**

(72) Inventors:
- **SUGITO, Tatsuaki**
 **Kariya-city, Aichi 4488661 (JP)**
- **KONO, Tsukasa**
 **Kariya-city, Aichi 4488661 (JP)**
- **KOBAYASHI, Atsushi**
 **Kariya-city, Aichi 4488661 (JP)**

(74) Representative: **Kuhnen & Wacker**
**Patent- und Rechtsanwaltsbüro PartG mbB**
**Prinz-Ludwig-Straße 40A**
**85354 Freising (DE)**

(54) **POSITION DETECTION DEVICE**

(57) A position detection device includes a substrate (30), a transmitter coil (31, 32), a target (22, 23, 24, 25) and receiver coils (34, 35, 36, 37, 40, 41, 42, 43). The transmitter coil is provided on the substrate and generates a magnetic field by supply of an alternating current. The target faces the substrate, moves in a predetermined movement direction (Dc) and generates a magnetic field that cancels out the magnetic field generated by the transmitter coil. The magnetic field generated by the target is caused by eddy currents induced in the target due to the magnetic field from the transmitter coil. The receiver coils are arranged in the movement direction on the substrate and receive the magnetic field generated by the transmitter coil. The substrate has a receiving area (301, 302, 303, 304) that is an area occupied by the receiver coils. The receiving area and the target satisfy inequality: $(M - 1)/4 \times w1 < w2 < w3$, where $w1$ is a width of the receiving area in the movement direction, $w2$ is a width of the target in the movement direction, $M$ is an integer between 1 and 3, and $w3$ is a standard width that satisfies equation: $w3 = M/4 \times w1$.

FIG. 10

EP 4 653 819 A1

# Description

## CROSS REFERENCE TO RELATED APPLICATION

This application is based on Japanese Patent Application No. 2023-005863 filed on January 18, 2023, the contents of which are incorporated herein by reference.

## TECHNICAL FIELD

The present disclosure relates to a position detection device.

## BACKGROUND ART

A known position detection device is a rotation angle detection device which uses electromagnetic induction. For example, a rotary angle sensor described in Patent Literature 1 has a substrate, a transmitter coil and a receiver coil placed on the substrate, and a target facing the substrate. The transmitter coil generates a magnetic field when supplied with a high-frequency current, and the receiver coil receives this magnetic field. The magnetic field from the transmitter coil induces eddy currents in the target, and the target generates a magnetic field that cancels out the magnetic field from the transmitter coil. The output of the receiver coil changes depending on the position of the target, and the position of the target can be detected based on the output of the receiver coil. Four receiver coils are arranged in a row, and the four receiver coils are designed to output sinusoidal signals that are shifted by 0.25 cycles each. The signal amplitude is amplified by connecting the first and third receiver coils in series and the second and fourth in series.

## PRIOR ART LITERATURE

## PATENT LITERATURE

Patent Literature 1: JP 2021-071340 A

## SUMMARY OF THE INVENTION

In the above configuration, the magnetic flux from the target passes through only one of the first and third receiver coils, which increases the amplitude of the signal. The magnetic flux from the target passes through only one of the second and fourth receiver coils, increasing the amplitude of the signal.

To increase the amplitude of the signal, the target width could be 1/4, 1/2 or 3/4 of the width of the area where the receiver coils are arranged. However, the magnetic flux generated by the target also travels outward from the target in a direction parallel to the substrate surface. Therefore, for example, when the target width is 1/2 of the width of the area where the receiver coils are arranged, and the target is facing the second and third receiver coils, magnetic flux from the target also enters the first and fourth receiver coils, resulting in smaller signal amplitude and a lower signal-to-noise ratio.

In view of the above, a purpose of this disclosure is to provide a position detection device that can improve a signal-to-noise ratio.

According to one aspect of the present disclosure, a position detection device includes a substrate, a transmitter coil, a target and receiver coils. The transmitter coil is provided on the substrate and configured to generate a magnetic field by supply of an alternating current. The target faces the substrate and is configured to move in a predetermined movement direction and generate a magnetic field that cancels out the magnetic field generated by the transmitter coil. The magnetic field generated by the target is caused by eddy currents induced in the target due to the magnetic field from the transmitter coil. The receiver coils are arranged in the movement direction on the substrate and configured to receive the magnetic field generated by the transmitter coil. The substrate has a receiving area that is an area occupied by the receiver coils. The receiving area and the target satisfy inequality: $(M - 1) / 4 \times w1 < w2 < w3$, where $w1$ is a width of the receiving area in the movement direction, $w2$ is a width of the target in the movement direction, $M$ is an integer between 1 and 3, and $w3$ is a standard width that satisfies equation: $w3 = M/4 \times w1$.

According to this, since the inequality: $(M-1)/4 \times w1 < w2 < w3$ is satisfied, one of two receiver coils included in the receiver coils can be covered by the target and the magnetic flux entering the other of the two receiver coils can be reduced. Thus, the amplitude of the signal output from the receiver coils can be increased and the signal-to-noise ratio can be improved.

The reference numerals in parentheses attached to the components and the like indicate an example of correspondence between the components and the like and specific components and the like described in an embodiment to be described below.

## BRIEF DESCRIPTION OF DRAWINGS

FIG. 1 is a schematic diagram illustrating a position detection device, viewed along a member axial direction, according to a first embodiment.

FIG. 2 is a cross-sectional view taken along a line II-II of FIG. 1, showing a vertical cross section of the position detection device.

FIG. 3 is a cross-sectional view taken along a line III-III of FIG. 1, showing a vertical cross section of the position detection device in a different orientation than in FIG. 2.

FIG. 4 is a top view illustrating only a rotary member of the position detection device according to the first embodiment.

FIG. 5 is a diagram illustrating a substrate of the position detection device and schematically illustrating each coil in the substrate according to the first embodiment.

FIG. 6 is a view in a direction indicated by an arrow VI of FIG. 5, schematically illustrating each transmitter coil in the substrate.

FIG. 7 is a schematic diagram corresponding to FIG. 5, in which receiver coils shown in FIG. 5 is replaced by receiving areas formed by the receiver coils.

FIG. 8 is a block diagram of the position detection device according to the first embodiment.

FIG. 9 is a diagram illustrating a waveform of a first voltage value generated in a first one-side receiver coil and a waveform of a second voltage value generated in a second one-side receiver coil according to the first embodiment.

FIG. 10 is a cross-sectional view taken along a line X-X of FIG. 1.

FIG. 11 is a cross-sectional view of a position detection device according to a second embodiment and corresponds to FIG. 10.

FIG. 12 is a diagram illustrating a substrate of a position detection device according to a third embodiment, schematically illustrating each coil in the substrate, and corresponding to FIG. 5.

FIG. 13 is a diagram illustrating a substrate of a position detection device according to a fourth embodiment, schematically illustrating each coil in the substrate, and corresponding to FIG. 5.

FIG. 14 is a diagram illustrating a substrate of a position detection device according to a fifth embodiment, schematically illustrating each coil in the substrate, and corresponding to FIG. 5.

EMBODIMENTS FOR CARRYING OUT THE INVENTION

Hereinafter, embodiments of the present disclosure will be described with reference to the drawings. In each of the following embodiments, parts that are identical or equivalent to each other are denoted with the same reference numerals.

First Embodiment

The present embodiment describes an example in which a position detection device 1 is used to detect a rotational position of a brake pedal or accelerator pedal of a vehicle pedal device. In the following description, the brake pedal or accelerator pedal may be referred to simply as a pedal.

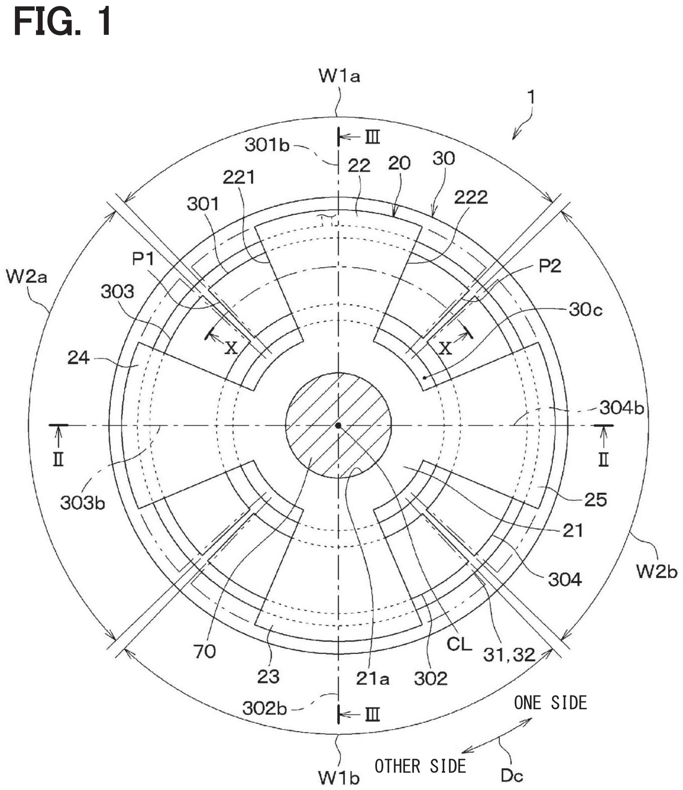

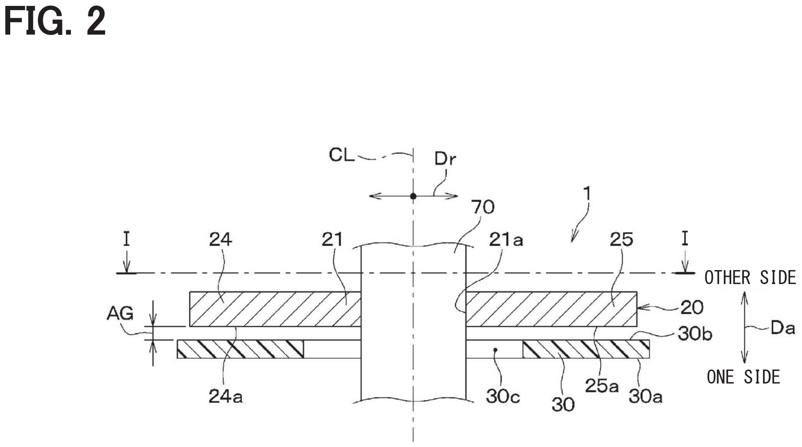

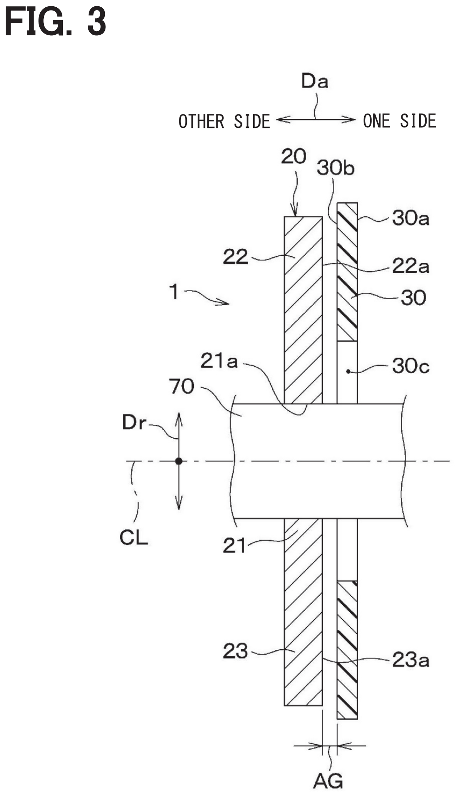

As shown in FIGS. 1 to 3, the position detection device 1 in this embodiment has a rotary member 20 and a substrate 30. A rotary shaft center CL shown in FIGS. 1 to 3 is the center of rotation of a rotary shaft 70 of the pedal and the rotary member 20. In the description of this embodiment, an axial direction Da of the rotary shaft center CL is also referred to as a member axial direction Da, a radial direction Dr of the rotary shaft center CL is also referred to as a member radial direction Dr, and a circumferential direction Dc of the rotary shaft center CL is also referred to as a member circumferential direction Dc. These directions Da, Dr and Dc are directions which cross each other, and are, strictly speaking, directions which are perpendicular to each other. FIG. 1 is a cross-sectional view taken along a line I-I of FIG. 2.

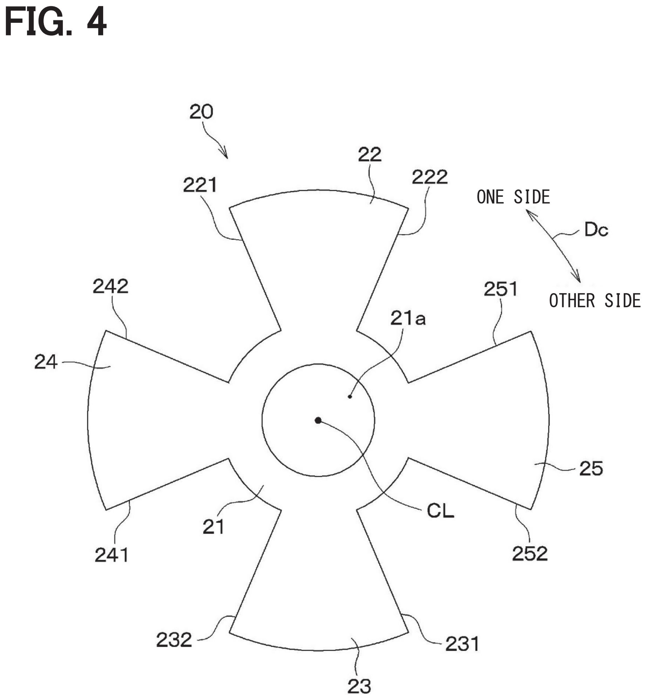

The rotary member 20 is made of metal and is formed as a flat plate having a thickness in the member axial direction Da. As shown in FIGS. 1 to 4, the rotary member 20 is couple to the rotary shaft 70 of the pedal to be rotated together without relative rotation. For example, the rotary member 20 may be made non-rotatable relative to the rotary shaft 70 through a detent key member, or it may be made non-rotatable by being welded to the rotary shaft 70.

The rotary member 20 is supported by the non-rotary member via the rotary shaft 70 so that the rotary member 20 is rotatable about the predetermined rotary shaft center CL, and rotates together with the pedal and the rotary shaft 70. Therefore, a rotational position of the pedal can be detected by detecting a rotational position of the rotary member 20. In other words, the rotational position of the rotary member 20 is also the rotational position of the pedal and the rotational position of the rotary shaft 70 that is a detection object.

Since the rotary member 20 is coupled to the rotary shaft 70 of the pedal, the rotary member 20 does not rotate once around the rotary shaft center CL, but rather reciprocates within a predetermined angular range around the rotary shaft center CL as the pedal is depressed. In FIG. 1, a part of the outline of each target 22, 23, 24, 25 of the rotary member 20 at its end position in its reciprocating motion is illustrated by a dash-dot-dot line.

The rotary member 20 includes a connecting portion 21, two first targets 22 and 23, and two second targets 24 and 25. That is, the two first targets 22 and 23 and the two second targets 24 and 25 included in that rotary member 20 rotate together around the rotary shaft center CL. The two first targets 22 and 23 and the two second targets 24 and 25 both move back and forth in the member circumferential direction Dc according to depressing of the pedal. The member circumferential direction Dc corresponds to a predetermined direction of movement in the present embodiment.

For example, the rotary member 20 is configured as a single component including the connecting portion 21, two first targets 22 and 23, and two second targets 24 and 25. For example, the rotary member 20 is formed as a flat plate such that a thickness of the rotary member 20 in the member axial direction Da is uniform, and thus the thicknesses of the four targets 22 to 25 in the member axial direction Da are the same as each other. In this embodiment, the two first targets 22 and 23 and the two second targets 24 and 25 may be referred to collectively as targets 22 to 25.

The connecting portion 21 is located in the center portion of the rotary member 20 and has a circular shape centered at the rotary shaft center CL. A fitting hole 21a is formed inside the connecting portion 21, which passes through the connecting portion 21 in the member axial direction Da, and the rotation shaft 70 is fitted into the fitting hole 21a so that the rotary shaft 70 is not rotatable relative to the connecting portion 21. In other words, the rotary member 20 is connected to the rotary shaft 70 at this connecting portion 21.

The two first targets 22 and 23 are each formed to protrude outward from the connecting portion 21 in the member radial direction Dr, and the two second targets 24 and 25 are also each formed to project outward from the connecting portion 21 in the member radial direction Dr.

A first one-side target 22, which is one of the two first targets 22, 23, is positioned on the opposite side across the rotary shaft center CL to a first other-side target 23, which is the other of the two first targets 22, 23. A second one-side target 24, which is one of the two second targets 24, 25, is positioned on the opposite side across the rotary shaft center CL to a second other-side target 25, which is the other of the two second targets 24, 25.

In detail, the four targets 22 to 25 are arranged in the following order: the first one-side target 22, the second one-side target 24, the first other-side target 23, and the second other-side target 25. They are spaced with equal pitch and positioned in a direction toward one side along the member circumferential direction Dc. That equal pitch is specifically a 90-degree pitch. For example, in a view along the member axial direction Da, the four targets 22 to 25 are arranged as a whole to be point symmetrical about the rotary shaft center CL.

One side of the first one-side target 22 in the member axial direction Da has a facing surface 22a facing an other surface 30b of the substrate 30, and one side of the first other-side target 23 in the member axial direction Da also has a facing surface 23a facing the other surface 30b of the substrate 30. One side of the second one-side target 24 in the member axial direction Da has a facing surface 24a facing the other surface 30b of the substrate 30, and one side of the second other-side target 25 in the member axial direction Da also has a facing surface 25a facing the other surface 30b of the substrate 30. These facing surfaces 22a, 23a, 24a, 25a are parallel to the other surface 30b of the substrate 30.

One side of the first one-side target 22 in the member circumferential direction Dc has a one end edge 221 and an other side of the first one-side target 22 in the member circumferential direction Dc has an other end edge 222. The first one-side target 22 has a circular-sector shape in which a width of the first one-side target 22 in the member circumferential direction Dc increases in a direction outward along the member radial direction Dr. Thus, the one end edge 221 and the other end edge 222 of the first one-side target 22 each extend straight in the member radial direction Dr in the view along the member axial direction Da. That is, the one end edge 221 and the other end edge 222 of the first one-side target 22 each extend orthogonally to a movement direction of the first one-side target 22 which is the member circumferential direction Dc.

The first other-side target 23, second one-side target 24, and second other-side target 25 also have the same circular-sector shape as the first one-side target 22. In the present embodiment, all the four targets 22 to 25 are identical in shape.

Accordingly, one side of the first other-side target 23 in the member circumferential direction Dc has a one end edge 231, and an other side of the first other-side target 23 in the member circumferential direction Dc has an other end edge 232. The one end edge 231 and the other end edge 232 extend straight in the member radial direction Dr in the view along the member axial direction Da. Further, one side of the second one-side target 24 in the member circumferential direction Dc has a one end edge 241, and an other side of the second one-side target 24 in the member circumferential direction Dc has an other end edge 242. The one end edge 241 and the other end edge 242 extend straight in the member radial direction Dr in the view along the member axial direction Da. Further, one side of the second other-side target 25 in the member circumferential direction Dc has a one end edge 251, and an other side of the second other-side target 25 in the member circumferential direction Dc has an other end edge 252. The one end edge 251 and the other end edge 252 extend straight in the member radial direction Dr in the view along the member axial direction Da.

In this embodiment, since all four targets 22 to 25 are the same shape and rotate together as described above, the movement ranges W1a, W1b, W2a and W2b of the respective targets 22, 23, 24 and 25 are the same length in the member circumferential direction Dc.

The movement range W1a of the first one-side target 22 is a maximum movable range of the first one-side target 22 in the member circumferential direction Dc within which the first one-side target 22 reciprocates. The movement range W1b of the first other-side target 23 is a maximum movable range of the first other-side target 23 in the member circumferential direction Dc within which the first other-side target 23 reciprocates. The movement range W2a of the second one-side target 24 is a maximum movable range of the second one-side target 24 in the member circumferential direction Dc within which the second one-side target 24 reciprocates. The movement range W2b of the second other-side target 25 is a maximum movable range of the second other-side target 25 in the member circumferential direction Dc within which the second other-side target 25 reciprocates.

As shown in FIGS. 1 to 3 and 5, the substrate 30 is a multilayer printed circuit board on which wiring patterns are formed and electrical components not-shown are mounted. The substrate 30 has one surface 30a and the other surface 30b which are flat and perpendicular to the member axial direction Da. In other words, the normal direction of the substrate 30 coincides with the member axial direction Da. The one surface 30a of the substrate 30 is on one side of the substrate 30 in the member axial direction Da, and the other surface 30b of the substrate 30 is on the other side of the substrate 30 opposite the one side of the substrate 30 in the member axial direction Da.

The substrate 30 is a non-rotary member that does not rotate relative to a vehicle body or other components. Therefore, the rotary member 20 rotates relative to the substrate 30.

The substrate 30 is positioned on one side of the four targets 22 to 25 in the member axial direction Da. The other surface 30b of the substrate 30 faces each of the facing surfaces 22a to 25a of the four targets 22 to 25 with an axial gap AG in the member axial direction Da. This axial gap AG is equal at any point between the substrate 30 and each of the four targets 22 to 25.

The substrate 30 has a disk shape centered at the rotary shaft center CL. A through hole 30c is formed in the center of the substrate 30, which passes through the substrate 30 in the member axial direction Da. The rotary shaft 70 is inserted through this through hole 30c.

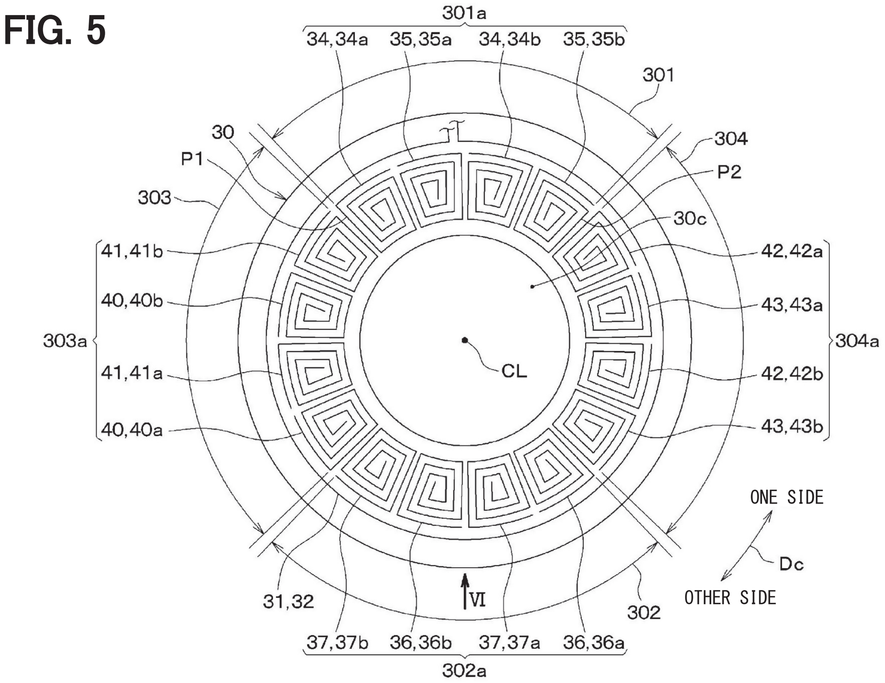

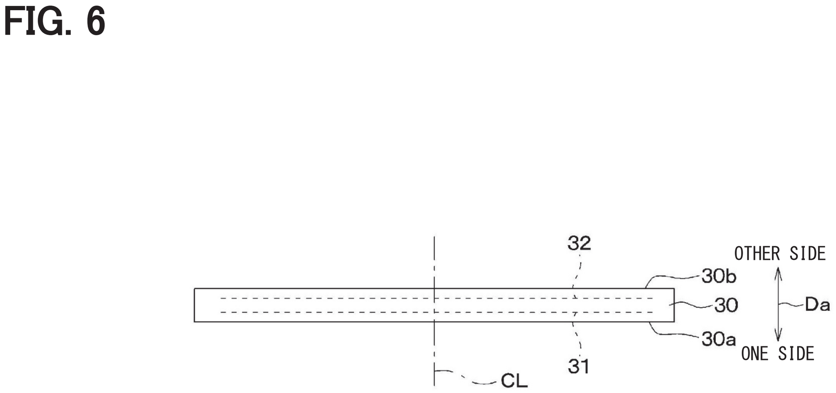

As shown in FIGS. 5 and 6, the substrate 30 has a first transmitter coil 31 and a second transmitter coil 32 formed as a part of the wiring pattern. The substrate 30 also has two first receiver coils 34, 36, two second receiver coils 35, 37, two third receiver coils 40, 42, and two fourth receiver coils 41, 43 formed as a part of the wiring pattern. In other words, all transmitter coils 31 and 32 and all receiver coils 34 to 37 and 40 to 43 in the position detection device 1 are formed on the single substrate 30.

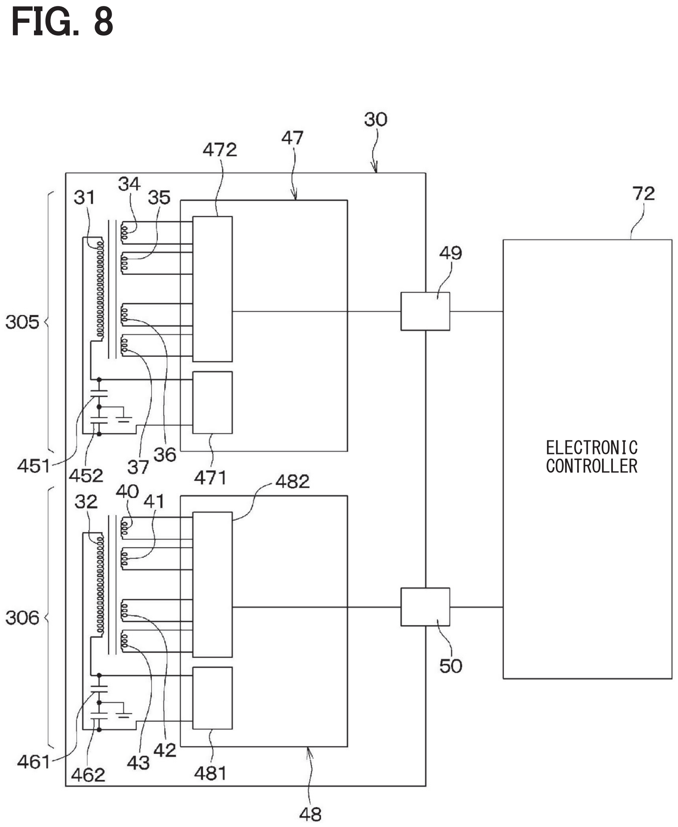

Each of the coils 31, 32, 34 to 37, and 40 to 43 possessed by the substrate 30 is connected via a not-shown connection wiring pattern to signal processors 47 and 48 (see FIG. 8) which are composed of an IC or the like mounted on the substrate 30. In FIGS. 5 and 6, each coil 31, 32, 34 to 37, and 40 to 43 is shown in a simplified manner for ease of viewing, and this is also applied in the drawings described below, which show each coil 31, 32, 34 to 37, and 40 to 43.

The first and second transmitter coils 31 and 32 are formed to overlap each other in a view along the member axial direction Da, but are displaced from each other in the thickness direction of the substrate 30, i.e., the member axial direction Da. For example, the first transmitter coil 31 is positioned apart from and on one side of the second transmitter coil 32 in the member axial direction Da.

The first and second transmitter coils 31 and 32 are each wound once or multiple times to have an annular shape along the member circumferential direction Dc. The first and second transmitter coils 31 and 32 surround all the receiver coils 34 to 37 and 40 to 43 included in the substrate 30 in the view along the member axial direction Da. In other words, in the view along the member axial direction Da, all of its receiver coils 34 to 37, 40 to 43 are located inside the first transmitter coil 31 and inside the second transmitter coil 32.

Therefore, when an alternating current flows in the first transmitter coil 31, induced current flows to all receiver coils 34 to 37 and 40 to 43 due to electromagnetic induction caused by energizing the first transmitter coil 31. When an alternating current flows in the second transmitter coil 32, induced current flows to all receiver coils 34 to 37 and 40 to 43 due to electromagnetic induction caused by energizing that second transmitter coil 32. In order to avoid the magnetic fields generated by the first and second transmitter coils 31 and 32 canceling each other, for example, alternating currents of the same phase and frequency flow through the first and second transmitter coils 31 and 32.

A first one-side receiver coil 34, which is one of the two first receiver coils 34 and 36, and a second one-side receiver coil 35, which is one of the two second receiver coils 35 and 37, are coils for detecting a position of the first one-side target 22 in the member circumferential direction Dc. In other words, the first one-side receiver coil 34 and the second one-side receiver coil 35 each output a detection signal according to the position of the first one-side target 22.

A first other-side receiver coil 36, which is the other of the two first receiver coils 34 and 36, and a second other-side receiver coil 37, which is the other of the two second receiver coils 35 and 37, are coils for detecting a position of the first other-side target 23 in the member circumferential direction Dc. In other words, the first other-side receiver coil 36 and the second other-side receiver coil 37 each output a detection signal according to the position of the first other-side target 23.

A third one-side receiver coil 40, which is one of the two third receiver coils 40 and 42, and a fourth one-side receiver coil 41, which is one of the two fourth receiver coils 41 and 43, are coils for detecting a position of the second one-side target 24 in the member circumferential direction Dc. In other words, the third one-side receiver coil 40 and the fourth one-side receiver coil 41 each output a detection signal according to the position of the second one-side target 24.

A third other-side receiver coil 42, which is the other of the two third receiver coils 40 and 42, and a fourth other-side receiver coil 43, which is the other of the two fourth receiver coils 41 and 43, are coils for detecting a position of the second other-side target 25 in the member circumferential direction Dc. In other words, the third other-side receiver coil 42 and the fourth other-side receiver coil 43 each output a detection signal according to the position of the second other-side target 25.

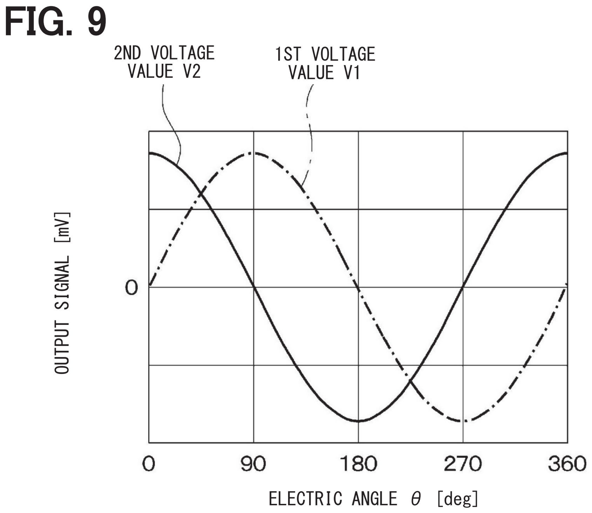

Each of the receiver coils 34 to 37 and 40 to 43 is composed of different wiring layers connected as appropriate through vias so that they do not interfere with each other (i.e., do not overlap). In FIG. 5 and the later drawings corresponding to FIG. 5, the vias in the substrate 30 are omitted as appropriate. The detection signal output by each receiver coil 34 to 37 and 40 to 43 is, for example, a voltage value. The detection signal output by the first one-side receiver coil 34 corresponds to a first voltage value $V1$ shown in FIG. 9 below, for example, and the detection signal output by the second one-side receiver coil 35 corresponds to a second voltage value $V2$ shown in FIG. 9 below, for example.

The first one-side receiver coil 34 has a first spiral section 34a and a second spiral section 34b. The first and second spiral sections 34a and 34b each form a spiral wiring pattern in the view along the member axial direction Da. In other words, the first and second spiral sections 34a, 34b each have a spiral-wound planar curve in the view along the member axial direction Da. The first and second spiral sections 34a and 34b are connected in series via, for example, a not-shown connection wiring pattern. The external shapes of the first and second spiral sections 34a and 34b are not limited to the shape shown in FIG. 5, but may be other shapes such as circular shapes.

The same is applied for the other receiver coils 35 to 37 and 40 to 43. That is, the second one-side receiver coil 35 has a first spiral section 35a and a second spiral section 35b connected in series with each other. The first other-side receiver coil 36 has a first spiral section 36a and a second spiral section 36b connected in series with each other, and the second other-side receiver coil 37 has a first spiral section 37a and a second spiral section 37b connected in series with each other.

The third one-side receiver coil 40 has a first spiral section 40a and a second spiral section 40b connected in series with each other, and the fourth one-side receiver coil 41 has a first spiral section 41a and a second spiral section 41b connected in series with each other. The third other-side receiver coil 42 has a first spiral section 42a and a second spiral section 42b connected in series with each other, and the fourth other-side receiver coil 43 has a first spiral section 43a and a second spiral section 43b connected in series with each other. These spiral sections 35a to 43b each have a spiral pattern shape in the view along the member axial direction Da, similar to the spiral sections 34a and 34b of the first one-side receiver coil 34. The above spiral sections 35a to 43b mean spiral sections 35a, 35b, 36a, 36b, 37a, 37b, 40a, 40b, 41a, 41b, 42a, 42b, 43a, 43b.

The spiral sections 34a and 34b of the first one-side receiver coil 34 are arranged to overlap one side of the first one-side target 22 in the member axial direction Da at a position within the movement range W1a of the first one-side target 22. The spiral sections 35a and 35b of the second one-side receiver coil 35 are also arranged to overlap one side of the first one-side target 22 in the member axial direction Da at a position within the movement range W1a of the first one-side target 22.

The spiral sections 34a, 34b, 35a, 35b are arranged in the order: the first spiral section 34a, the first spiral section 35a, the second spiral section 34b, and the second spiral section 35b, from one side to the other side in the member circumferential direction Dc. The spiral sections 34a, 34b, 35a, 35b form one area in the view along the member axial direction Da.

In other words, the first one-side receiver coil 34 and the second one-side receiver coil 35 form a first one-side receiving area 301 that the receiver coils 34 and 35 occupy in the substrate 30. The first one-side receiver coil 34 and the second one-side receiver coil 35 constitute a first one-side receiver coil group 301a as a combination of the receiver coils 34 and 35.

As described above, the spiral sections 36a and 36b of the first other-side receiver coil 36 are arranged to overlap one side of the first other-side target 23 in the member axial direction Da at a position within the movement range W1b of the first other-side target 23. The spiral sections 37a and 37b of the second other-side receiver coil 37 are also arranged to overlap the one side of the first other-side target 23 in the member axial direction Da at a position within the movement range W1b of the first other-side target 23.

And these spiral sections 36a, 36b, 37a, 37b are arranged in the order: the first spiral section 36a, the first spiral section 37a, the second spiral section 36b, the second spiral section 37b, from one side to the other side in the member circumferential direction Dc. The spiral sections 36a, 36b, 37a, 37b form one area in the view along the member axial direction Da.

In other words, the first other-side receiver coil 36 and the second other-side receiver coil 37 form a first other-side receiving area 302 that the receiver coils 36 and 37 occupy in the substrate 30. The first other-side receiver coil 36 and the second other-side receiver coil 37 constitute a first other-side receiver coil group 302a as a combination of the receiver coils 36 and 37.

The spiral sections 40a and 40b of the third one-side receiver coil 40 are arranged to overlap one side of the second one-side target 24 in the member axial direction Da at a position within the movement range W2a of the second one-side target 24. The spiral sections 41a and 41b of the fourth one-side receiver coil 41 are also arranged to overlap the one side of the second one-side target 24 in the member axial direction Da at a position within the movement range W2a of the second one-side target 24.

The spiral sections 40a, 40b, 41a, 41b are arranged in the order: the first spiral section 40a, the first spiral section 41a, the second spiral section 40b and the second spiral section 41b, from one side to the other side in the member circumferential direction Dc. The spiral sections 40a, 40b, 41a, 41b form one are in the view along the member axial direction Da.

That is, the third one-side receiver coil 40 and the fourth one-side receiver coil 41 form a second one-side receiving area 303 that the receiver coils 40 and 41 occupy in the substrate 30. The third one-side receiver coil 40 and the fourth one-side receiver coil 41 constitute a second one-side receiver coil group 303a as a combination of the receiver coils 40 and 41.

The spiral sections 42a and 42b of the third other-side receiver coil 42 are arranged to overlap one side of the second other-side target 25 in the member axial direction Da at a position within the movement range W2b of the second other-side target 25. The spiral sections 43a and 43b of the fourth other-side receiver coil 43 are also arranged to overlap the one side of the second other-side target 25 in the member axial direction Da at a position within the movement range W2b of the second other-side target 25.

The spiral sections 42a, 42b, 43a, 43b are arranged in the order: the first spiral section 42a, the first spiral section 43a, the second spiral section 42b and the second spiral section 43b, from one side to the other side in the member circumferential direction Dc. The spiral sections 42a, 42b, 43a, 43b form one area in the view along the member axial direction Da.

The third other-side receiver coil 42 and the fourth other-side receiver coil 43 form a second other-side receiving area 304 that the receiver coils 42 and 43 occupy in the substrate 30. The third other-side receiver coil 42 and the fourth other-side receiver coil 43 constitute a second other-side receiver coil group 304a as a combination of the receiver coils 42 and 43.

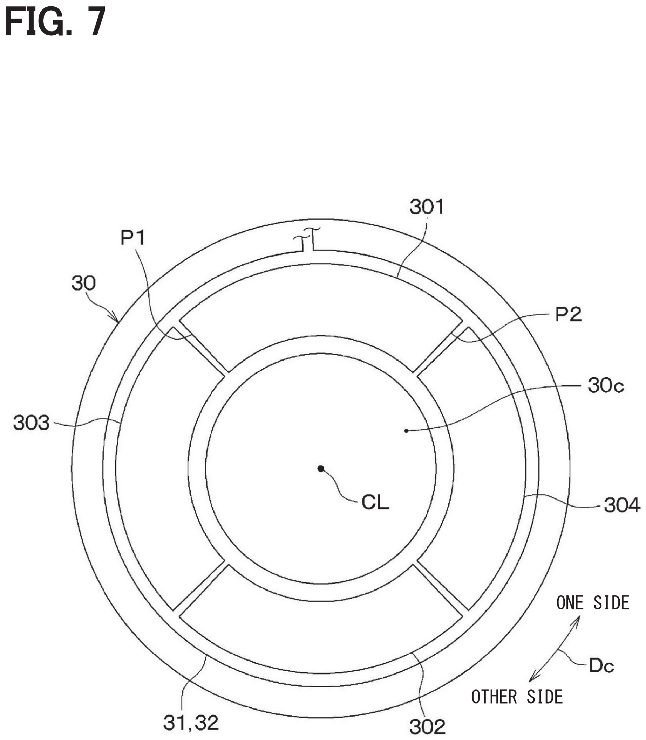

FIG. 7 shows the receiving areas 301, 302, 303, and 304 described above, which are substitutions of the receiver coils 34 to 37 and 40 to 43 shown in FIG. 5.

As shown in FIGS. 5 and 7, the spiral sections 34a to 43b of the receiver coils 34 to 37 and 40 to 43, as a whole, are equally spaced in the member circumferential direction Dc to form an annular shape centered at the rotary shaft center CL. In other words, the four receiving areas 301 to 304 are also aligned in the member circumferential direction Dc so that as a whole they form an annular shape centered at the rotary shaft center CL. The above spiral sections 34a to 43b mean spiral sections 34a, 34b, 35a, 35b, 36a, 36b, 37a, 37b, 40a, 40b, 41a, 41b, 42a, 42b, 43a, 43b.

The four receiving areas 301 to 304 are arranged in the order: the first one-side receiving area 301, the second other-side receiving area 304, the first other-side receiving area 302, and the second one-side receiving area 303, from one side to the other side in the member circumferential direction Dc. Specifically, the four receiving areas 301 to 304 are arranged at a pitch of 90 degrees in the member circumferential direction Dc, centered at the rotary shaft center CL.

Therefore, the first one-side receiving area 301 is located opposite to the first other-side receiving area 302 across the rotational shaft center CL, and the second one-side receiving area 303 is located opposite to the second other-side receiving area 304 across the rotational shaft center CL. That is, the first one-side receiver coil group 301a is located opposite to the first other-side receiver coil group 302a across the rotary shaft center CL, and the second one-side receiver coil group 303a is located opposite to the second other-side receiver coil group 304a across the rotary shaft center CL.

As a confirmation, a one-side end position P1 of the first one-side receiving area 301 in the member circumferential direction Dc (i.e., circumferential one-side end position P1) coincides with a one-side end position of the first one-side receiver coil 34 (i.e., an end position of the first spiral section 34a on one side in the circumferential direction). An other-side end position P2 of the first one-side receiving area 301 in the member circumferential direction Dc (i.e., circumferential other-side end position P2) coincides with an other-side end position of the second one-side receiver coil 35 (i.e., an end position of the second spiral section 35b on the other side in the circumferential direction). This relationship is also applied for the first other-side receiving area 302, the second one-side receiving area 303, and the second other-side receiving area 304.

As shown in FIGS. 1 and 7, the first one-side target 22 reciprocates in the member circumferential direction Dc within the movement range W1a of the first one-side target 22, as described above. However, the movement range W1a of the first one-side target 22 is configured so that the first one-side target 22 does not overlap the other sides of the second one-side receiving area 303 and the second other-side receiving area 304 in the member axial direction Da. In other words, the first one-side target 22 reciprocates in the member circumferential direction Dc within a range out of the second one-side receiving area 303 and the second other-side receiving area 304.

The same is applied for the other movement ranges W1b, W2a, and W2b. The movement range W1b of the first other-side target 23 is configured so that the first other-side target 23 does not overlap the other sides of the second one-side receiving area 303 and the second other-side receiving area 304 in the member axial direction Da. The movement range W2a of the second one-side target 24 is configured so that the second one-side target 24 does not overlap the other sides of the first one-side receiving area 301 and the first other-side receiving area 302 in the member axial direction Da. The movement range W2b of the second other-side target 25 is configured so that the second other-side target 25 does not overlap the other sides of the first one-side receiving area 301 and the first other-side receiving area 302 in the member axial direction Da.

More specifically, a one-side end position of the movement range W1a in the member circumferential direction Dc coincides with the circumferential one-side end position P1 of the first one-side receiving area 301. An other end position of the movement range W1a in the member circumferential direction Dc coincides with the circumferential other-side end position P2 of the first one-side receiving area 301. The first one-side target 22 reciprocates in the circumferential direction Dc without departing from an area located on the other side of the circumferential one-side end position P1 of the first one-side receiving area 301 and on the one side of the circumferential other-side end position P2 of the first one-side receiving area 301 in the member circumferential direction Dc. This is also applied for the location relationships between the other targets 23, 24, 25 and the receiving areas 302, 303, 304.

The movement range W1a of the first one-side target 22 is symmetrical in the member circumferential direction Dc with respect to a center position 301b of the first one-side receiving area 301 in the member circumferential direction Dc. The movement range W1b of the first other-side target 23 is symmetrical in the member circumferential direction Dc with respect to a center position 302b of the first other-side receiving area 302 in the member circumferential direction Dc. The movement range W2a of the second one-side target 24 is symmetrical in the member circumferential direction Dc with respect to a center position 303b of the second one-side receiving area 303 in the member circumferential direction Dc. The movement range W2b of the second other-side target 25 is symmetrical in the member circumferential direction Dc with respect to a center position 304b of the second other-side receiving area 304 in the member circumferential direction Dc.

As shown in FIG. 8, various electrical components are mounted on the substrate 30 in addition to the coils 31, 32, 34 to 37, and 40 to 43 described above. Specifically, capacitors 451, 452, 461, 462, ICs comprising the first signal processor 47, ICs comprising the second signal processor 48, a first terminal 49, and a second terminal 50 are also mounted on the substrate 30.

The first transmitter coil 31, the two first receiver coils 34, 36, the two second receiver coils 35, 37, the two capacitors 451, 452, the first signal processor 47, and the first terminal 49 constitute a first system 305. The second transmitter coil 32, the two third receiver coils 40, 42, the two fourth receiver coils 41, 43, the two capacitors 461, 462, second signal processor 48, and the second terminal 50 constitute a second system 306. Since the first system 305 and the second 306 are independent as electrical circuits, the position detection device 1 can detect the rotational position of the rotary member 20 by one of the systems 305 and 306 even if another of the systems malfunctions.

The first and second signal processors 47 and 48 each function as an in-vehicle microcomputer with a CPU, RAM, ROM, nonvolatile rewritable memory, etc., not shown. That is, the first and second signal processors 47 and 48 individually read and execute computer programs stored in ROM or nonvolatile rewritable memory, which are non-transitory substantive storage media. By executing this computer program, a method corresponding to the computer program is performed. The same is applied for an electronic controller 72, which is discussed below. CPU is an abbreviation for Central Processing Unit, ROM is an abbreviation for Read Only Memory, and RAM is an abbreviation for Random Access Memory.

The first transmitter coil 31, the two first receiver coils 34, 36, and the two second receiver coils 35, 37 are individually connected to the first signal processor 47. For example, the two capacitors 451 and 452 are connected in series between both ends of the first transmitter coil 31 and the first signal processor 47, and a portion connecting each capacitor 451 and 452 to each other is connected to ground. The first signal processor 47 is then connected to the electronic controller 72 located outside the position detection device 1 via the first terminal 49 fixed to the substrate 30.

The same is applied for the connection relationship around the second signal processor 48. That is, the second transmitter coil 32, the two third receiver coils 40, 42, and the two fourth receiver coils 41, 43 are individually connected to the second signal processor 48. For example, two capacitors 461 and 462 are connected in series between the both ends of the second transmitter coil 32 and the second signal processor 48, and a portion connecting each capacitor 461 and 462 to each other is connected to ground. The second signal processor 48 is then connected to the electronic controller 72 located outside via the second terminal 50 fixed to the substrate 30. Thus, the first signal processor 47 and the second signal processor 48 output the rotational position (in other words, the angle of rotation) of the rotary member 20 separately to the electronic controller 72.

Next, the operation of the first signal processor 47 described above will be described.

As shown in FIG. 8, the first signal processor 47 includes an oscillator 471 and a receiver 472. The oscillator 471 is connected to both ends of the first transmitter coil 31 and applies an alternating current of a predetermined frequency to the first transmitter coil 31. This causes the first transmitter coil 31 to generate a magnetic field in the member axial direction Da that passes through the receiver coils 34 to 37 and 40 to 43. This magnetic field causes an induced current to flow in the receiver coils 34 to 37 and 40 to 43, respectively.

The receiver 472 is connected to the respective both ends of the first and second receiver coils 34, 36, 35, and 37. The receiver 472 obtains a conversion signal (i.e., first voltage value V1 in FIG. 9) through demodulation or AD conversion on an output from the first one-side receiver coil 34. Along with that, the receiver 472 also obtains a conversion signal (i.e., second voltage value V2 in FIG. 9) through demodulation or AD conversion on an output from the second one-side receiver coil 35.

The spiral sections 34a, 34b, 35a, and 35b output different electrical signals expressed in equations (1) to (4) below, respectively.

$$(1)\ \sin^+ = A \sin(\theta+\alpha)$$

$$(2)\ \sin^- = A \sin(\theta-\alpha)$$

$$(3)\ \cos^+ = A \cos(\theta+\alpha)$$

$$(4)\ \cos^- = A \cos(\theta-\alpha)$$

A is the amplitude, which is the same in spiral sections 34a, 34b, 35a, 35b. $\theta$ is rotation angle (electric angle: deg) and varies in 360° cycles. $\alpha$ is a phase at an electric angle. The value of $\alpha$ is set appropriately to cancel higher-order components superimposed on the detection signals output from the first one-side receiver coil 34 and the second one-side receiver coil 35.

For simplicity of explanation, the signal expressed in equation (1) is referred to as $\sin^+$ signal, the signal expressed in equation (2) is referred to as $\sin^-$ signal, the signal expressed in equation (3) is referred to as $\cos^+$ signal, and the signal expressed in equation (4) is referred to as $\cos^-$ signal.

As mentioned above, the first spiral section 34a outputs the $\sin^+$ signal and the second spiral section 34b outputs the $\sin^-$ signal. The first one-side receiver coil 34 consists of the first and second spiral sections 34a and 34b connected in series, and outputs a signal (hereinafter referred to as sin signal) synthesized from the $\sin^+$ and $\sin^-$ signals as a detection signal. Since the first spiral section 34a and the second spiral section 34b are connected in series, the first one-side receiver coil 34 outputs a differential signal, in which the $\sin^+$ and $\sin^-$ signals are combined, to the receiver 472.

On the other hand, the first spiral 35a outputs the $\cos^+$ signal, and the second spiral 35b outputs the $\cos^-$ signal. The second one-side receiver coil 35 consists of the first and second spiral sections 35a and 35b connected in series, and outputs a signal (hereinafter referred to as cos signal) synthesized from the $\cos^+$ and $\cos^-$ signals as a detection signal. The second one-side receiver coil 35 outputs a differential signal, in which the $\cos^+$ and $\cos^-$ signals are synthesized, to the receiver 472 in the same manner as the first one-side receiver coil 34.

Based on each of the acquired conversion signals, the receiver 472 calculates the rotation angle (i.e., rotation position) of the first one-side target 22 by computing, for example, an inverse tangent function using those conversion signals. The relationship between the electric angle $\theta$ in the electrical signals of each receiver coil 34, 35 and the rotation angle (i.e., mechanical angle) of the first one-side target 22 is determined in advance according to the sizes of the first one-side target 22 and receiver coils 34, 35, for example. Therefore, the rotation angle of the first one-side target 22 can be calculated based on the electric angle $\theta$. For example, in this embodiment, the relationship between the above electric angle $\theta$ and the mechanical angle is the same for all of the receiver coil groups 301a, 302a, 303a, 304a.

As described above, the receiver 472 performs demodulation or AD conversion on the coil output to obtain a conversion signal based on the output from the first other-side receiver coil 36 and a conversion signal based on the output from the second other-side receiver coil 37. Then, similar to the calculation of the rotation angle of the first one-side target 22 described above, the receiver 472 calculates the rotation angle (i.e., rotation position) of the first other-side target 23 based on each of its acquired conversion signals.

The receiver 472 then determines the rotational position of the rotary member 20 based on the respective rotational positions of the first one-side target 22 and the first other-side target 23. For example, the average of the respective rotational positions of the first one-side target 22 and the first other-side target 23 may be used as the rotation position of the rotary member 20. Alternatively, one of the rotation positions of the first one-side target 22 and the first other-side target 23 may be adopted in preference, and as long as that one rotational position is not abnormal, the one rotational position may be taken as the rotational position of the rotary member 20 as is.

The rotational position of the rotary member 20 may be calculated without the respective rotation positions of the first one-side target 22 and the first other-side target 23 being calculated. For example, the rotational position of the rotary member 20 may be calculated based on the sum of the voltage values as the detection signals (e.g., above conversion signal) from each of the first receiver coils 34 and 36 and the sum of the voltage values as the detection signals from each of the second receiver coils 35 and 37.

When the receiver 472 thus calculates or determines the rotation position of the rotary member 20 based on the detection signals from the first and second receiver coils 34, 36, 35, 37, the receiver 472 outputs a signal indicating the rotation position of the rotary member 20 to the external electronic controller 72 via the first terminal 49.

The above is the basic operation of the first signal processor 47. Like the first signal processor 47, the second signal processor 48 also has an oscillator 481 and a receiver 482. The oscillator 481 of the second signal processor 48 is the same as the oscillator 471 of the first signal processor 47, and the receiver 482 of the second signal processor 48 is the same as the receiver 472 of the first signal processor 47. The operation of the second signal processor 48 is the same as that of the first signal processor 47, so a description of the operation of the second signal processor 48 is omitted.

Next, the first voltage value V1 of the first one-side receiver coil 34 and the second voltage value V2 of the second one-side receiver coil 35 at the time of rotation of the rotary member 20 will be described.

For example, when an alternating current of a predetermined frequency is applied to the first transmitter coil 31, a magnetic field is generated in the member axial direction Da and passes through the first one-side receiver coil 34 and the second one-side receiver coil 35. Since the magnetic field is changed by the alternating current, electromagnetic induction generates an induced electromotive force for each of the first one-side receiver coil 34 and the second one-side receiver coil 35.

When the first one-side target 22 faces the first transmitter coil 31, the first one-side receiver coil 34, and the second one-side receiver coil 35, eddy currents are generated in the first one-side target 22 and a magnetic field caused by the eddy currents is generated. Therefore, the magnetic field passing through the first one-side receiver coil 34 and the second one-side receiver coil 35 in the member axial direction Da has a portion that passes through an area facing the first one-side target 22 and is cancelled out by the magnetic field caused by the eddy currents.

In accordance with rotation of the rotary member 20, the position and size of the area facing the first one-side target 22 changes in each of the first one-side receiver coil 34 and the second one-side receiver coil 35. Therefore, the first voltage value V1 generated in the first one-side receiver coil 34 and the second voltage value V2 generated in the second one-side receiver coil 35 change periodically with the rotation of the rotary member 20. In this system, for example, as shown in FIG. 9, the first voltage value V1 generated in the first one-side receiver coil 34 is sinusoidal, and the second voltage value V2 generated in the second one-side receiver coil 35 is cosinusoidal with the same wavelength as the first voltage value V1.

The voltage values generated in receiver coils 36, 37, and 40 to 43 other than the first one-side receiver coil 34 and the second one-side receiver coil 35 are the same as above, so their description is omitted.

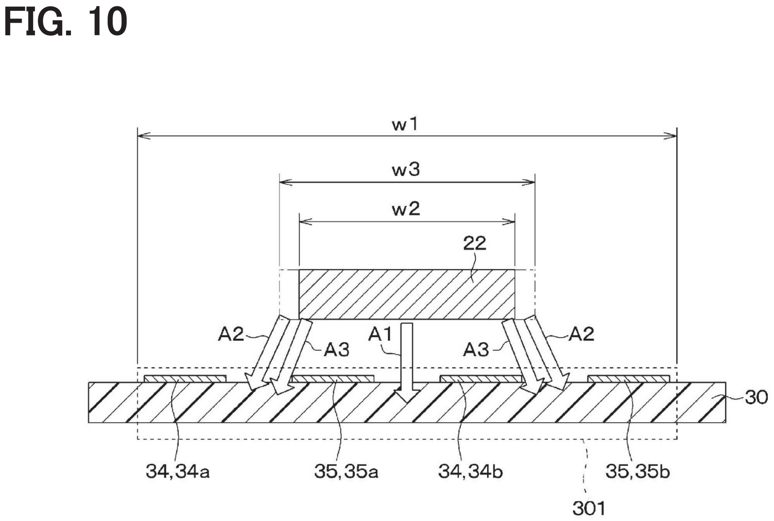

As shown in FIG. 10, the width of the first one-side receiving area 301 in the member circumferential direction Dc is w1. The width of the first one-side target 22 in the member circumferential direction Dc is w2. The width w2 is smaller than the standard width w3 that is a predetermined standard width. The standard width w3 is defined as $w3 = M/N \times w1$, where M is a natural number and N is an integer greater than M. In detail, M is an integer between 1 inclusive and 3 inclusive, N = 4, and $(M-1)/4 \times w1 < w2 < w3$. In the present embodiment, M = 2. In other words, the standard width w3 is set to w1/2, and $w1/4 < w2 < w1/2$.

The widths w1, w2, and the standard width w3 are the widths positioned on the same member radial direction Dr. In other words, when the width of the first one-side receiving area 301 in a cross-section along the X-X line shown in FIG. 1 is w1, the width of the first one-side target 22 in the same cross-section is w2, and the standard width w3 is set based on this width w1. For example, assuming a cross-section along the member circumferential direction Dc passing through an inner circumference part of the first one-side receiving area 301 near the rotary shaft center CL in the member radial direction Dr, and setting the width w1 in this cross-section, the width of the first one-side target 22 in this cross-section is w2. For example, assuming a cross-section along the member circumferential direction Dc passing through an outer circumference part of the first one-side receiving area 301 far from the rotary shaft center CL in the member radial direction Dr, and setting the width w1 in this cross-section, the width of the first one-side target 22 in this cross-section is w2.

Although a design value of the width w2 is set as described above based on a design value of the width w1, variations in the dimensions and arrangement of the first one-side receiving area 301, first one-side target 22, etc. may occur during the manufacturing process of the position detection device 1. In designing the position detection device 1, the width w2 may be set taking such variations into account, or the width w2 may be set without taking variations into account.

In the position detection device 1, when the magnetic flux from the first one-side target 22 passes through only one of the first and second spiral sections 34a and 34b, the amplitude of the sin signal increases. Similarly, when the magnetic flux from the first one-side target 22 passes through only one of the first and second spiral sections 35a and 35b, the amplitude of the cos signal increases.

To increase the amplitude of the signal in this way, for example, w2 = w1/2 could be used. However, the magnetic flux generated from the first one-side target 22 is not only directed in the member axial direction Da, but also outward from the first one-side target 22 in the member circumferential direction Dc. Therefore, when w2 = w1/2, for example, and the first one-side target 22 is facing the spiral sections 34b and 35a, the magnetic flux from the first one-side target 22 also enters the spiral sections 34a and 35b, and the amplitudes of the sin and cos signals are reduced. In other words, when w2 = w3, as shown in FIG. 10, the magnetic flux generated from the first one-side target 22 is directed along the member axial direction Da as shown by an arrow A1 and also toward the spiral sections 34a and 35b as shown by arrows A2. In FIG. 10, a part of the outline of the first one-side target 22 when w2 = w3 is illustrated with a dash-dot-dot line.

In contrast, the width w2 is smaller than w1/2 in this embodiment. Therefore, when the first one-side target 22 is facing only one of the first and second spiral sections 34a and 34b, the magnetic flux entering the other is reduced. For example, as shown in FIG. 10, when the first one-side target 22 faces the spiral sections 34b and 35a, the magnetic flux from the first one-side target 22 is directed outward of the member circumferential direction Dc as shown by arrows A3. However, since the width w2 is smaller than w1/2, the magnetic flux entering the spiral sections 34a and 35b is reduced compared to the case where w2 = w1/2. When the first one-side target 22 faces only one of the first and second spiral sections 35a and 35b, the magnetic flux entering the other is reduced. For example, when the first one-side target 22 faces the spiral sections 34b and 35a, the magnetic flux entering the spiral sections 34a and 35b from the first one-side target 22 is reduced. This increases the amplitude of the sin and cos signals and improves the signal-to-noise ratio.

If the width w2 is too small, the flux passing through the spiral sections 34a, 34b, 35a, 35b facing the first one-side target 22 will decrease, resulting in a lower signal-to-noise ratio. Therefore, it is desirable to increase the width w2 to some extent. Specifically, the width w2 may be set so that the first one-side target 22 can create a condition that covers the entirety of one of the first and second spiral sections 34a and 34b. The width w2 may be set so that the first one-side target 22 can cover the entirety of one of the first and second spiral sections 35a and 35b. Therefore, for example, w1/4 < w2 is desirable.

The same is applied for the targets 23 to 25 and the receiver coils 36, 37, and 40 to 43. In other words, when the width of the first other-side target 23 in the member circumferential direction Dc is larger than 1/4 and smaller than 1/2 of the width of the first other-side receiving area 302, the amplitude of the sin and cos signals output from the receiver coils 36 and 37 is increased, and the S/N ratio is improved. When the width of the second one-side target 24 in the member circumferential direction Dc is larger than 1/4 and smaller than 1/2 of the width of the second one-side receiving area 303, the amplitude of the sin and cos signals output from the receiver coils 40 and 41 is increased, and the S/N ratio is improved. When the width of the second other-side target 25 in the member circumferential direction Dc is larger than 1/4 and smaller than 1/2 of the width of the second other-side receiving area 304, the amplitude of the sin and cos signals output from the receiver coils 42 and 43 is increased, and the S/N ratio is improved.

Second Embodiment

Next, a second embodiment will be described. This embodiment is explained mainly with respect to points different from those of the first embodiment. In addition, explanations of the same or equivalent portions as those in the above embodiment is omitted or simplified. The same applies to a description of the embodiments described later.

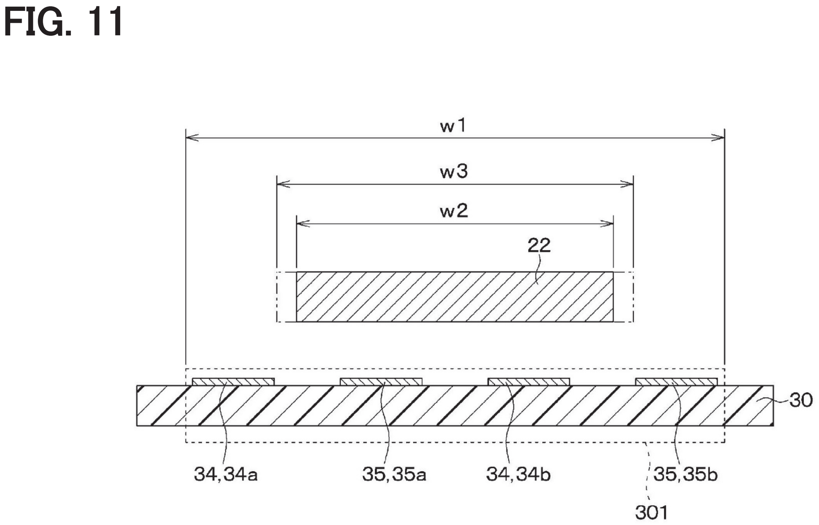

As shown in FIG. 11, a standard width w3 is set such that w3 = 3/4 × w1 and w1/2 < w2 < w3.

To increase the amplitude of the sin and cos signals, for example, the width w2 could be 3/4 × w1. In other words, when the one end edge 221 reaches one-side end position of the movement range W1a, the magnetic flux from the first one-side target 22 passes through both the first and second spiral sections 34a and 34b. Then, for the second one-side receiver coil 35, it is conceivable to increase the amplitude of the cos signal by the magnetic flux from the first one-side target 22 passing through the first spiral section 35a only. When the other end edge 222 reaches the other end position of the movement range W1a, the magnetic flux from the first one-side target 22 passes through both the first and second spiral sections 35a and 35b. Then, for the first one-side receiver coil 34, it is conceivable to increase the amplitude of the sin signal by the magnetic flux from the first one-side target 22 passing through the second spiral section 34b only.

However, the magnetic flux generated from the first one-side target 22 is not only directed in the member axial direction Da, but also outward from the first one-side target 22 in the member circumferential direction Dc. Therefore, when w2 = 3/4 × w1, and the one end edge 221 reaches the one-side end position of the movement range W1a, the magnetic flux from the first one-side target 22 also enters the second spiral section 35b and the amplitude of the cos signal may decrease. When the other end edge 222 reaches the other end position of the movement range W1a, the magnetic flux from the first one-side target 22 also enters the first spiral section 34a and the amplitude of the sin signal may decrease.

In contrast, the width w2 is smaller than 3/4 × w1 in this embodiment. Therefore, when the one end edge 221 reaches the one-side end position of the movement range W1a, the magnetic flux entering the second spiral section 35b is reduced. When the other end edge 222 reaches the other end position of the movement range W1a, the magnetic flux entering the first spiral section 34a is reduced. This increases the amplitude of the sin and cos signals and improves the signal-to-noise ratio.

The same is applied for the targets 23 to 25 and the receiver coils 36, 37, and 40 to 43. In other words, when the width of the first other-side target 23 in the member circumferential direction Dc is larger than 1/2 and smaller than 3/4 of the width of the first other-side receiving area 302, the amplitude of the sin and cos signals output from the receiver coils 36 and 37 is increased, and the S/N ratio is improved. When the width of the second one-side target 24 in the member circumferential direction Dc is larger than 1/2 and smaller than 3/4 of the width of the second one-side receiving area 303, the amplitude of the sin and cos signals output from the receiver coils 40 and 41 is increased, and the S/N ratio is improved. When the width of the second other-side target 25 in the member circumferential direction Dc is larger than 1/2 and smaller than 3/4 of the width of the second other-side receiving area 304, the amplitude of the sin and cos signals output from the receiver coils 42 and 43 is increased, and the S/N ratio is improved.

This embodiment is similar to the first embodiment, except for the above-described aspects. Thus, this embodiment can achieve the advantages obtained by the configuration common to the first embodiment described above in a similar manner as in the first embodiment.

Third Embodiment

Next, a third embodiment will be described. This embodiment is explained mainly with respect to points different from those of the first embodiment.

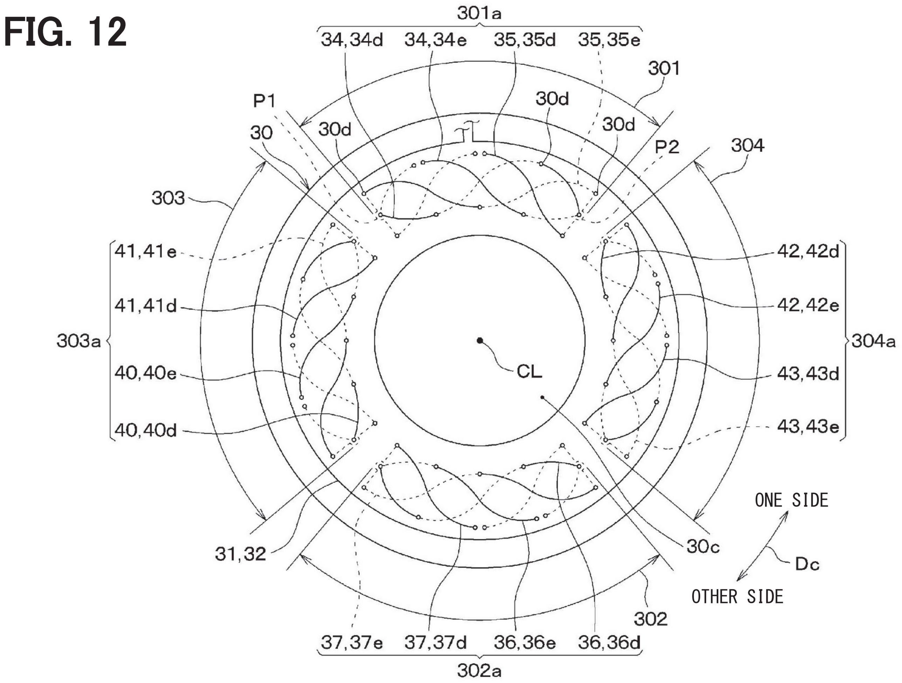

As shown in FIG. 12, pattern shapes of the receiver coils 34 to 37 and 40 to 43 in this embodiment are different from those in the first embodiment. Therefore, the spiral sections 34a to 43b (see FIG. 5) of the first embodiment are not provided in this embodiment.

In this embodiment, as in the first embodiment, all receiver coils 34 to 37 and 40 to 43 are located inside the first transmitter coil 31 and inside the second transmitter coil 32 in the view along the member axial direction Da. Each of the receiver coils 34 to 37 and 40 to 43 is composed of different wiring layers connected as appropriate through vias 30d so that they do not interfere with each other (i.e., do not overlap).

In this embodiment, each receiver coil 34 to 37, 40 to 43 is composed of two adjacent wiring layers stacked in sequence and connected by via 30d. For example, in this embodiment, each receiver coil 34 to 37, 40 to 43 is formed by connecting the wiring layer on the topmost surface layer located on the other surface 30b of the substrate 30 to the next layer on the topmost surface layer. With respect to each receiver coil 34 to 37 and 40 to 43 in FIG. 12, the wiring layer formed on the topmost surface layer in substrate 30 is indicated by a solid line, and the wiring layer formed on the layer next to the topmost surface layer is indicated by a dashed line. The transmitter coils 31 and 32 are all shown as solid lines.

Specifically, the first one-side receiver coil 34 has a first wavy section 34d and a second wavy section 34e. The first and second wavy sections 34d and 34e each form a sinusoidal pattern shape in a view along the member axial direction Da. The first and second wavy sections 34d and 34e are connected in series via a connecting wiring pattern, for example, to form a closed loop.

The second one-side receiver coil 35 has a first wavy section 35d and a second wavy section 35e. The first and second wavy sections 35d and 35e each form a cosinusoidal pattern shape in the view along the member axial direction Da. The first and second wavy sections 35d and 35e are connected in series via a connecting wiring pattern, for example, to form a closed loop. For example, the wavy sections 34d, 34e, 35d, 35e of the first and second one-side receiver coils 34 and 35 are arranged to overlap the one side of the first one-side target 22 in the member axial direction Da at a position within the movement range W1a of the first one-side target 22.

The same is applied for other receiver coil groups 302a, 303a, 304a other than the first one-side receiver coil group 301a which includes the receiver coils 34 and 35 described above. That is, the first other-side receiver coil 36 has a first wavy section 36d and a second wavy section 36e that form a sinusoidal pattern shape in the view along the member axial direction Da and are connected in series with each other. The second other-side receiver coil 37 has a first wavy section 37d and a second wavy section 37e that form a cosinusoidal pattern shape in the view along the member axial direction Da and are connected in series with each other. For example, the wavy sections 36d, 36e, 37d, 37e of the first and second other-side receiver coils 36 and 37 are arranged to overlap the one side of the first other-side target 23 in the member axial direction Da at a position within the movement range W1b of the first other-side target 23.

The third one-side receiver coil 40 has a first wavy section 40d and a second wavy section 40e that form a sinusoidal pattern shape in the view along the member axial direction Da and are connected in series with each other. The fourth one-side receiver coil 41 has a first wavy section 41d and a second wavy section 41e that form a cosinusoidal pattern shape in the view along the member axial direction Da and are connected in series with each other. For example, the wavy sections 40d, 40e, 41d, 41e of the third and fourth one-side receiver coils 40 and 41 are arranged to overlap the one side of the second one-side target 24 in the member axial direction Da at a position within the movement range W2a of the second one-side target 24.

The third other-side receiver coil 42 has a first wavy section 42d and a second wavy section 42e that form a sinusoidal pattern shape in the view along the member axial direction Da and are connected in series with each other. The fourth other-side receiver coil 43 has a first wavy section 43d and a second wavy section 43e that form a cosinusoidal pattern shape in the view along the member axial direction Da and are connected in series with each other. For example, the wavy sections 42d, 42e, 43d, 43e of the third and fourth other-side receiver coils 42 and 43 are arranged to overlap the one side of the second other-side target 25 in the member axial direction Da at a position within the movement range W2b of the second other-side target 25.

In this embodiment, the circumferential one-side end position P1 of the first one-side receiving area 301 coincides with the one-side end position of the second one-side receiver coil 35 in the member circumferential direction Dc. The circumferential other-side end position P2 of the first one-side receiving area 301 coincides with the other end position of the second one-side receiver coil 35 in the member circumferential direction Dc. This relationship is also applied for the first other-side receiving area 302, the second one-side receiving area 303, and the second other-side receiving area 304.

In this configuration where the receiver coils 34 and 35 have wavy sections 34d, 34e, 35d, 35e, the amplitudes of the sin and cos signals are increased by the magnetic flux from the first one-side target 22, for example, passing only through half the period of the wavy sections 34d, 34e, 35d, 35e. In this embodiment, as in the first embodiment, since w1/4 < w2 < w1/2, the signal amplitude can be increased through the magnetic flux as described above to improve the signal-to-noise ratio. The same is applied for the targets 23 to 25 and the receiver coils 36, 37, and 40 to 43.

This embodiment is similar to the first embodiment, except for the above-described aspects. Thus, this embodiment can achieve the advantages obtained by the configuration common to the first embodiment described above in a similar manner as in the first embodiment.

Fourth Embodiment

A fourth embodiment is described next. This embodiment is explained mainly with respect to points different from those of the first embodiment.

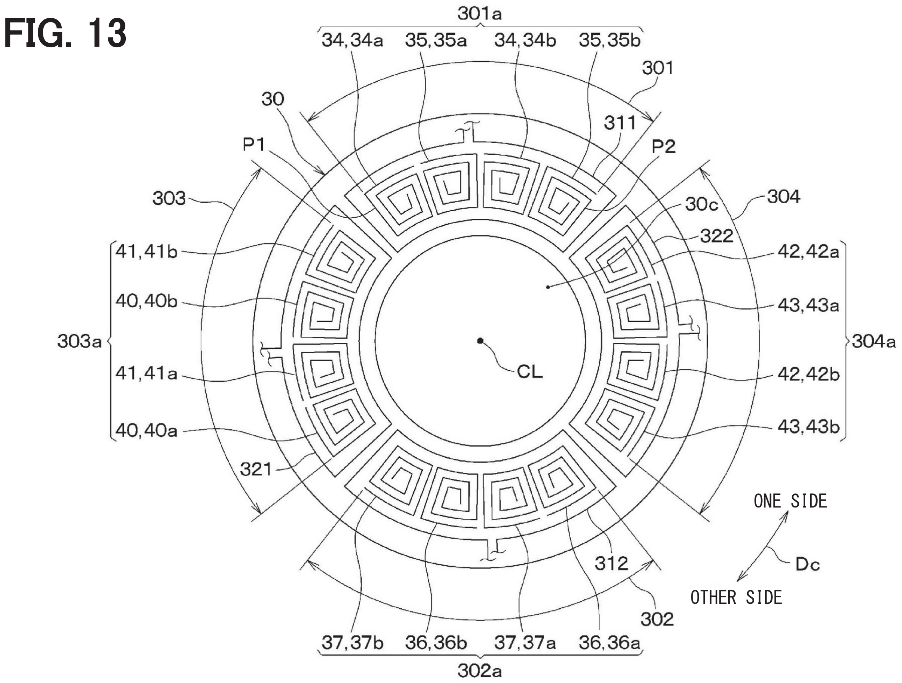

As shown in FIG. 13, a substrate 30 in this embodiment has two first transmitter coils 311 and 312 instead of the first transmitter coil 31 (see FIG. 5) of the first embodiment, and two second transmitter coils 321 and 322 instead of the second transmitter coil 32 (see FIG. 5) of the first embodiment.

The two first transmitter coils 311 and 312 are a first one-side transmitter coil 311 and a first other-side transmitter coil 312. The two second transmitter coils 321 and 322 are a second one-side transmitter coil 321 and a second other-side transmitter coil 322.

In the view along the member axial direction Da, the first and second one-side receiver coils 34 and 35 are located inside the first one-side transmitter coil 311 while the other receiver coils 36, 37, 40 to 43 are located outside the first one-side transmitter coil 311. Therefore, when an alternating current flows in the first one-side transmitter coil 311, an induced current flows to the first and second one-side receiver coils 34 and 35 due to electromagnetic induction caused by energizing the first one-side transmitter coil 311. In the view along the member axial direction Da, the first one-side transmitter coil 311 has an annular-sector shape along the periphery of the first one-side receiving area 301.

In the view along the member axial direction Da, the first and second other-side receiver coils 36 and 37 are located inside the first other-side transmitter coil 312 while the other receiver coils 34, 35, 40 to 43 are located outside the first other-side transmitter coil 312. Therefore, when an alternating current flows in the first other-side transmitter coil 312, an induced current flows to the first and second other-side receiver coils 36 and 37 due to electromagnetic induction caused by energizing the first other-side transmitter coil 312. In the view along the member axial direction Da, the first other-side transmitter coil 312 has an annular-sector shape along the periphery of the first other-side receiving area 302.

In the view along the member axial direction Da, the third and fourth one-side receiver coils 40 and 41 are located inside the second one-side transmitter coil 321 while the other receiver coils 34 to 37, 42 and 43 are located outside the second one-side transmitter coil 321. Therefore, when an alternating current flows in the second one-side transmitter coil 321, an induced current flows to the third and fourth one-side receiver coils 40 and 41 due to electromagnetic induction caused by energizing the second one-side transmitter coil 321. In the view along the member axial direction Da, the second one-side transmitter coil 321 has an annular-sector shape along the periphery of the second one-side receiving area 303.

In the view along the member axial direction Da, the third and fourth other-side receiver coils 42 and 43 are located inside the second other-side transmitter coil 322 while the other receiver coils 34 to 37, 40 and 41 are located outside the second other-side transmitter coil 322. Therefore, when an alternating current flows in the second other-side transmitter coil 322, an induced current flows to the third and fourth other-side receiver coils 42 and 43 due to electromagnetic induction caused by energizing the second other-side transmitter coil 322. In the view along the member axial direction Da, the second other-side transmitter coil 322 has an annular-sector shape along the periphery of the second other-side receiving area 304.

The transmitter coils 311, 312, 321, 322 are arranged in the order: the first one-side transmitter coil 311, the second other-side transmitter coil 322, the first other-side transmitter coil 312 and the second one-side transmitter coil 321, from one side to the other side in the member circumferential direction Dc. The plurality of transmitter coils 311, 312, 321, and 322 are arranged side by side with intervals. The transmitter coils 311, 312, 321, and 322 as a whole form an annular shape centered on the rotary shaft center CL.

Except the above descriptions, the first one-side transmitter coil 311 and the first other-side transmitter coil 312 are the same as the first transmitter coil 31 of the first embodiment, and the second one-side transmitter coil 321 and the second other-side transmitter coil 322 are the same as the second transmitter coil 32 of the first embodiment.

The configurations of the transmitter coils 311, 312, 321 and 322 described above makes it possible to generate electromagnetic induction to the receiver coils separately for each of the receiver coil groups 301a, 302a, 303a and 304a.

In this embodiment, each of the transmitter coils 311, 312, 321, 322 may be formed in the same wiring layer in the substrate 30.

This embodiment is same as the first embodiment, except for the above described aspects. Thus, this embodiment can achieve the advantages obtained by the configuration common to the first embodiment described above in a similar manner as in the first embodiment.

Fifth Embodiment

A fifth embodiment is described next. The present embodiment will be explained mainly with respect to portions different from those of the third embodiment.

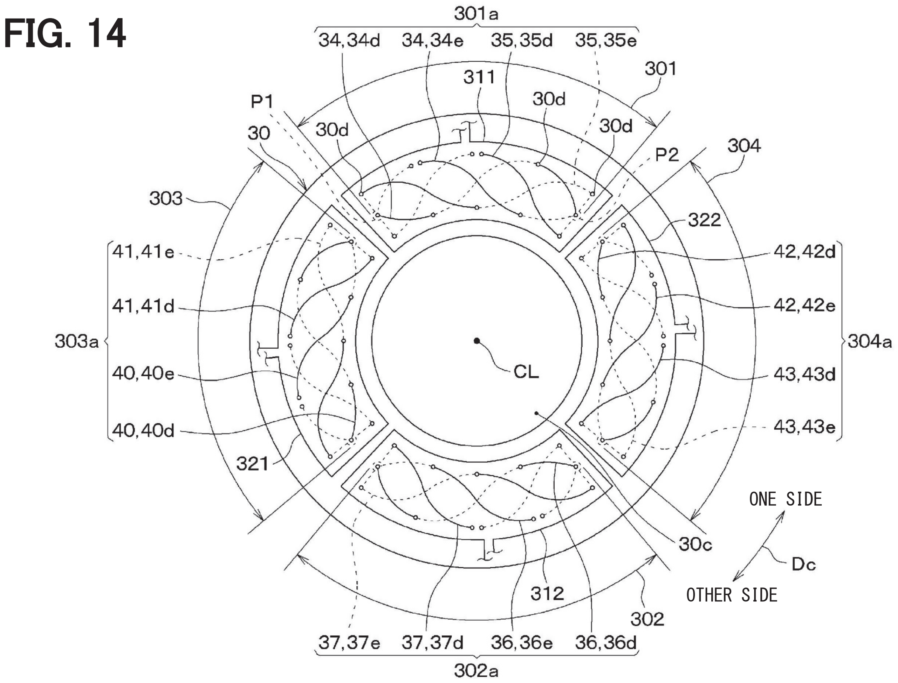

As shown in FIG. 14, a substrate 30 in this embodiment has two first transmitter coils 311 and 312, similar to the fourth embodiment, instead of the first transmitter coil 31 of the third embodiment (see FIG. 12). The substrate 30 has two second transmitter coils 321 and 322, similar to the fourth embodiment, instead of the second transmitter coil 32 of the third embodiment (see FIG. 12).

Except the above descriptions, the present embodiment is the same as the third embodiment. Thus, this embodiment can achieve the advantages obtained by the configuration common to the third embodiment described above in a similar manner as in the third embodiment.

Other Embodiments

(1) In each of the above embodiments, the position detection device 1 is used, for example, to detect the rotational position of a brake pedal or accelerator pedal for a vehicle, but the use of the position detection device 1 is not limited to this and can be assumed in various ways. The position detection device 1 may also be used for applications other than for vehicles.

(2) In each of the above-mentioned embodiments, for example, as shown in FIG. 1, the movement direction of targets 22 to 25 is the member circumferential direction Dc, but this is just one example. For example, the targets 22 to 25 may move linearly back and forth, and the position detection device 1 may detect the position of the targets 22 to 25 in the movement direction.

(3) In each of the above-mentioned embodiments, all four targets 22 to 25 have the same circular-sector shape, as shown in FIG. 1, but this is just one example. The shape of the targets 22 to 25 does not have to have the circular-sector shape, and the shapes of the targets 22 to 25 may differ from each other.

(4) In each of the above embodiments, for example, as shown in FIG. 1, the rotary member 20 has two first targets 22 and 23, but one of the two first targets 22 and 23 may be omitted. Similarly, one of the two second targets 24 and 25 of the rotary member 20 may be omitted. Further, the rotary member 20 may have three or more first targets 22 and 23 and three or more second targets 24 and 25.

(5) In each of the above embodiments, as shown in FIG. 8, the position detection device 1 has the first system 305 and the second system 306, which are independent electrical circuits, but the position detection device 1 may have three or more systems that are independent electrical circuits. The position detection device 1 may have only one of the first system 305 and the second system 306.

(6) A plurality of receiver coil groups 301a to 304a may be located in each receiving area 301 to 304. For example, two receiver coil groups 301a may be arranged in the first one-side receiving area 301 in the member circumferential direction Dc. In this case, two first one-side target 22 are arranged with the same center angle at a 45-degree pitch. Then, the sum of the widths of the two first one-side targets 22 is set as w2, and w2 satisfies the inequality: $(M-1)/4 \times w1 < w2 < w3$.

(7) In the first embodiment and the fourth embodiment, w2 may satisfy the inequality: $0 < w2 < w1/4$. In this configuration, when the first one-side target 22 faces only one of the first and second spiral sections 34a and 34b, the magnetic flux entering the other is reduced. When the first one-side target 22 faces only one of the first and second spiral sections 35a and 35b, the magnetic flux entering the other is reduced. This increases the amplitude of the sin and cos signals and improves the signal-to-noise ratio.

(8) The present disclosure is not limited to the above-described embodiment and can be implemented in various modifications. In addition, the embodiments described above are not unrelated to each other, and can be appropriately combined unless the combination is obviously impossible. For example, it is possible to combine the second embodiment with the third through fifth embodiments.

Individual elements or features of a particular embodiment are not necessarily essential unless it is specifically stated that the elements or the features are essential in the foregoing description, or unless the elements or the features are obviously essential in principle. A quantity, a value, an amount, a range, or the like, if specified in the above-described example embodiments, is not necessarily limited to the specific value, amount, range, or the like unless it is specifically stated that the value, amount, range, or the like is necessarily the specific value, amount, range, or the like, or unless the value, amount, range, or the like is obviously necessary to be the specific value, amount, range, or the like in principle. Further, in each of the embodiments described above, when referring to the material, shape, positional relationship, and the like of the components and the like, except in the case where the components are specifically specified, and in the case where the components are fundamentally limited to a specific material, shape, positional relationship, and the like, the components are not limited to the material, shape, positional relationship, and the like.

**Claims**

1. A position detection device comprising:

    a substrate (30);

a transmitter coil (31, 32) provided on the substrate and configured to generate a magnetic field by supply of an alternating current;
a target (22, 23, 24, 25) facing the substrate and configured to move in a predetermined movement direction (Dc) and generate a magnetic field that cancels out the magnetic field generated by the transmitter coil, the magnetic field generated by the target being caused by eddy currents induced in the target due to the magnetic field from the transmitter coil; and
receiver coils (34, 35, 36, 37, 40, 41, 42, 43) arranged in the movement direction on the substrate and configured to receive the magnetic field generated by the transmitter coil, wherein the substrate has a receiving area (301, 302, 303, 304) that is an area occupied by the receiver coils, and
the receiving area and the target satisfy inequality: $(M - 1) / 4 \times w1 < w2 < w3$, where
w1 is a width of the receiving area in the movement direction,
w2 is a width of the target in the movement direction,
M is an integer between 1 and 3, and
w3 is a standard width that satisfies equation: $w3 = M/4 \times w1$.

2. The position detection device according to claim 1, wherein
the receiver coils have spiral sections (34a, 34b, 35a, 35b, 36a, 36b, 37a, 37b, 40a, 40b, 41a, 41b, 42a, 42b, 43a, 43b).

3. The position detection device according to claim 1, wherein

the receiver coils have wavy sections (34d, 34e, 35d, 35e, 36d, 36e, 37d, 37e, 40d, 40e, 41d, 41e, 42d, 42e, 43d, 43e), and
M is 2.

4. The position detection device according to any one of claims 1 to 3, wherein

the substrate has a disk-shape,
the receiving area has an annular-sector shape as a part of the substrate, and
the transmitter coil is arranged along a periphery of the receiving area and has an annular-sector shape.

5. The position detection device according to any one of claims 1 to 3, wherein

the substrate has a disk-shape, and
the transmitter coil is arranged along a circumferential direction (Dc) of the substrate and has

an annular shape.

# FIG. 1

**FIG. 2**

# FIG. 3

# FIG. 4

# FIG. 5

# FIG. 6

EP 4 653 819 A1

# FIG. 7

# FIG. 8

# FIG. 9

2ND VOLTAGE VALUE V2    1ST VOLTAGE VALUE V1

OUTPUT SIGNAL [mV]

0

0    90    180    270    360

ELECTRIC ANGLE θ [deg]

FIG. 10

EP 4 653 819 A1

# FIG. 11

FIG. 12

FIG. 13

FIG. 14

## INTERNATIONAL SEARCH REPORT

International application No.

**PCT/JP2023/045500**

### A. CLASSIFICATION OF SUBJECT MATTER

***G01D 5/20***(2006.01)i
FI: G01D5/20 110F

According to International Patent Classification (IPC) or to both national classification and IPC

### B. FIELDS SEARCHED

Minimum documentation searched (classification system followed by classification symbols)

G01D5/12-5/252; G01B7/00-7/34

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2021-76548 A (NIPPON SEIKI CO., LTD.) 20 May 2021 (2021-05-20) paragraphs [0004]-[0005], [0010]-[0045], [0073], fig. 1-8 | 1, 3, 5 |
| Y | | 2, 4-5 |
| Y | JP 2018-44817 A (TOKAI RIKA CO., LTD.) 22 March 2018 (2018-03-22) paragraphs [0014]-[0030], fig. 1-4 | 2, 4-5 |
| A | US 2022/0155106 A1 (ALLEGRO MICROSYSTEMS, LLC) 19 May 2022 (2022-05-19) paragraphs [0024]-[0063], fig. 1-10 | 1-5 |
| A | US 2022/0187102 A1 (PIHER SENSORS & CONTROLS, S.A.) 16 June 2022 (2022-06-16) paragraphs [0036]-[0054], fig. 1-7 | 1-5 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **31 January 2024** | **13 February 2024** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (July 2022)

**INTERNATIONAL SEARCH REPORT**
Information on patent family members

| International application No. |
|---|
| **PCT/JP2023/045500** |

| Patent document cited in search report | | | Publication date (day/month/year) | Patent family member(s) | | | Publication date (day/month/year) |
|---|---|---|---|---|---|---|---|
| JP | 2021-76548 | A | 20 May 2021 | (Family: none) | | | |
| JP | 2018-44817 | A | 22 March 2018 | (Family: none) | | | |
| US | 2022/0155106 | A1 | 19 May 2022 | US | 11326903 | B1 | |
| US | 2022/0187102 | A1 | 16 June 2022 | WO | 2021/014045 | A1 | |
| | | | | EP | 4006481 | A1 | |
| | | | | ES | 1239859 | U | |
| | | | | CN | 113661371 | A | |
| | | | | KR | 10-2022-0035321 | A | |

Form PCT/ISA/210 (patent family annex) (July 2022)

**REFERENCES CITED IN THE DESCRIPTION**

**Patent documents cited in the description**

- JP 2023005863 A

- JP 2021071340 A